# EUROPÄISCHE PATENTANMELDUNG

(11) **EP 3 284 531 A1**
(43) Veröffentlichungstag der Anmeldung: **21.02.2018**
(21) Anmeldenummer: 16184798.3
(22) Anmeldetag: 18.08.2016
(51) Int. Cl.: B01J 19/30, F28F 25/08, B01J 19/32

(54) **FÜLLKÖRPER**

(71) Anmelder: Vereinigte Füllkörper-Fabriken GmbH & Co. KG, 56235 Ransbach-Baumbach (DE)
(72) Erfinder: Schwämmlein, Kurt, 55545 Bad Kreuznach (DE)
(74) Vertreter: Quermann, Helmut

(57) **Zusammenfassung**

Die Erfindung betrifft einen Füllkörper (1 a), insbesondere für Stoff- und/oder Wärmeaustauschkolonnen, der von einer Gas- und/oder Flüssigkeitsströmung durchsetzbar ist. Der Füllkörper (1 a) Weist eine Außenstruktur (4), eine Innenstruktur (5), ein erstes Haltemittel (2) zum Herstellen einer Verbindung zwischen dem Füllkörper (1 a) und einem zweiten Füllkörper (1 b) sowie ein zweites Haltemittel (2) zum Herstellen einer Verbindung zwischen dem Füllkörper (1 a) und einem dritten Füllkörper (1 c), wobei das jeweilige Haltemittel (2) in den jeweiligen Füllkörper (1 b, 1 c) einsteckbar ist. Durch die Außenstruktur (4) ist eine Außenkontur (8, 9) mit zwei einander abgewandten Hauptausdehnungsflächen (8) und mit zumindest drei an die Hauptausdehnungsflächen (8) angrenzenden Seitenflächen (9) gebildet ist, wobei das erste Haltemittel (2) im Bereich einer ersten Seitenfläche (9) und das zweite Haltemittel (2) im Bereich einer zweiten Seitenfläche (9) ausgebildet ist.

## Beschreibung

Die Erfindung betrifft einen Füllkörper, insbesondere für Stoff- und/oder Wärmeaustauschkolonnen, der von einer Gas- und/oder Flüssigkeitsströmung durchsetzbar ist, aufweisend eine Außenstruktur, eine Innenstruktur und aufweisend mehrere Haltemittel zum Herstellen einer Verbindung zwischen dem Füllkörper und weiteren Füllkörpern, wobei das jeweilige Haltemittel in den jeweils zu verbindenden Füllkörper einsteckbar ist.

Es ist bekannt, Füllkörper verschiedener Ausführungsformen als regellose Schüttungen in Kolonnen, Reaktoren und ähnlichen Apparaten einzusetzen. Technische Anwendungen sind beispielsweise gegeben bei thermischen, chemischen oder physikalischen Verfahren, wie Absorption, Desorption (Strippung), Destillation, Rektifikation, Extraktion, direkter Gaskühlung, regenerativer Verbrennung, katalytischer Stoffumwandlung und anderen verfahrenstechnischen Trennprozessen, bei denen verschiedene Phasen bzw. Medien effektiv in Kontakt gebracht werden sollen.

Die Füllkörper vergrößern die Oberfläche in dem von ihnen ausgefüllten Volumen und intensivieren dadurch den Stoff- bzw. Wärmeaustausch zwischen den verschiedenen Phasen bzw. Medien innerhalb dieses Volumens. Die Phasengrenzfläche für den Stoffübergang stimmt in der Regel nicht exakt mit der geometrischen Füllkörperoberfläche überein, sondern ist vielmehr die Summe aus der während des Prozesses benetzten Füllkörperoberfläche und der Oberflächensumme aller sich im Füllkörperbett bildenden Tropfen.

Ferner dienen Füllkörper bzw. Füllkörperschüttungen der Abscheidung kleiner und kleinster Flüssigkeitströpfchen bis hin zur Abscheidung von sogenannten Aerosolen. Auch finden Füllkörper als Aufwuchsfläche für einen Biofilm in biologischen Anlagen und als Tropfkörper in Wäschern Anwendung.

Das durch die Füllkörper gebildete Füllkörperbett weist gegenüber der Strömung der Phasen einen bestimmten Druckverlust auf. Dieser hängt vom Gasbelastungsfaktor, der Berieselungsdichte, dem Füllkörpertyp, der Füllkörpergröße, der geometrischen Gestaltung des Füllkörpers sowie der Anordnung der Füllkörper und weiteren Parametern ab.

Die Füllkörper müssen für alle Anwendungen eine geeignete mechanische Stabilität und eine geeignete Oberfläche aufweisen, sowie eine gute Durchmischung der verschiedenen Phasen oder Medien erzeugen, ohne der Strömung der Phasen oder Medien jedoch einen zu großen Druckverlust entgegenzusetzen. Das für den jeweiligen Trennprozess oder chemischen bzw. thermischen Prozess notwendige Schüttvolumen soll so gering wie möglich sein.

In der Regel muss ein geeigneter Kompromiss zwischen den entgegengesetzt verlaufenden Anforderungen, wie zum Beispiel geringer Druckverlust bei möglichst großer Füllkörperoberfläche, gefunden werden.

Ein derartiger Füllkörper, der mit weiteren Füllkörpern in Form einer regellosen Schüttung für die vorgenannten Anwendungsgebiete Anwendung findet, ist beispielsweise aus der Druckschrift EP 1 586 375 A1 bekannt.

Neben einer regellosen Schüttung von Füllkörpern als Einbauten in Apparaten in der Verfahrenstechnik finden auch sogenannte "strukturierte Packungen" als Einbauten Anwendung. Eine derartige "strukturierte Packung" umfasst meist eine Mehrzahl von Packungselementen, die in einer vorgegebenen Richtung der Fluidströmung in einer bestimmten Abfolge und Ausrichtung zueinander angeordnet sind. Eine "strukturierte Packung" der vorgenannten Art ist beispielsweise in der Druckschrift EP 1 166 868 A2 beschrieben.

Ferner ist aus der Druckschrift EP 0 663 055 B1 ein Füllkörper bekannt, der die Merkmale des Oberbegriffs des Patentanspruchs 1 aufweist. Der Füllkörper weist eine Außenstruktur, eine Innenstruktur, ein erstes Haltemittel zum Herstellen einer Verbindung zwischen dem Füllkörper und einem zweiten Füllkörper sowie ein zweites Haltemittel zum Herstellen einer Verbindung zwischen dem Füllkörper und einem dritten Füllkörper auf, wobei das jeweilige Haltemittel in den jeweiligen zu verbindenden Füllkörper einsteckbar ist. Die in der vorgenannten Druckschrift beschriebenen Füllkörper ermöglichen es, mittels der Haltemittel mehrere Füllkörper zu einer linearen Anordnung von Füllkörpern zusammenzustecken.

Aufgabe der vorliegenden Erfindung ist es, einen Füllkörper, der die Merkmale des Oberbegriffs des Patentanspruchs 1 aufweist, derart weiterzubilden, dass es mit derart gestalteten Füllkörpern möglich ist, unterschiedliche Einbauten, beispielsweise eine regellose Schüttung von Einzelfüllkörpern, eine regellose Schüttung von teilweise geordneten Füllkörpern, eine "strukturierte Packung" oder ein Packungselement für eine "strukturierte Packung" zu verwirklichen. Ferner ist Aufgabe der vorliegenden Erfindung, eine Anordnung von miteinander verbundenen Füllkörpern, die gemäß den Merkmalen des Patentanspruchs 1 ausgebildet sind, zu schaffen.

Gelöst wird die Aufgabe durch einen Füllkörper, der gemäß den Merkmalen des Patentanspruchs 1 ausgebildet ist, ferner durch eine Anordnung, die gemäß dem Patentanspruch 21 ausgebildet ist.

Der Füllkörper weist eine Außenstruktur, eine Innenstruktur, ein erstes Haltemittel zum Herstellen einer Verbindung zwischen dem Füllkörper und einem zweiten Füllkörper sowie ein zweites Haltemittel zum Herstellen einer Verbindung zwischen dem Füllkörper und einem dritten Füllkörper auf, wobei das jeweilige Haltemittel in den jeweiligen Füllkörper einsteckbar ist. Ferner ist durch die Außenstruktur eine Außenkontur des Füllkörpers mit zwei einander abgewandten Hauptausdehnungsflächen und mit zumindest drei an die Hauptausdehnungsflächen angrenzenden Seitenflächen gebildet. Dabei ist das erste Haltemittel im Bereich einer ersten Seitenfläche ausgebildet und das zweite Haltemittel ist im Bereich einer zweiten Seitenfläche ausgebildet.

Ein derart gestalteter Füllkörper ermöglicht es, durch Zusammenstecken von Einzelfüllkörpern einen neuen Füllkörper zu schaffen, beispielsweise durch ein Zusammenstecken von zwei einzelnen Füllkörpern einen annähernd doppelt so großen Füllkörper zu schaffen. Solche mittels Zusammenstecken gebildete Füllkörper können wiederum in Form einer regellosen Schüttung als Einbauten verwendet werden. Abhängig von den verwendeten einzelnen Füllkörpern und der Anordnung der verbundenen Füllkörper zueinander, können Füllkörper mit unterschiedlichsten Eigenschaften, beispielsweise spezifischen Oberflächen, Druckwiderständen usw., in einfacher Art und Weise mittels Zusammenstecken geschaffen und an die spezifischen Anforderungen individuell angepasst werden.

In einer Schüttung von derart miteinander verbundenen Füllkörpern bilden die verbundenen Füllkörper geordnete Bereiche, wobei die Eigenschaften der Bereiche, beispielsweise die Ausdehnung der Bereiche, durch die Anzahl und Ausrichtung der miteinander verbunden Füllkörper der Anordnung variiert werden kann.

Vorzugsweise sind der erste und der zweite Füllkörper identisch ausgebildet und werden derart zusammengesteckt, dass die beiden Hauptausdehnungsflächen in die gleiche Richtung weisen.

Der dritte Füllkörper kann beispielsweise derart mit dem ersten Füllkörper verbunden werden, dass die drei Füllkörper, insbesondere die Hauptausdehnungsflächen oder durch die Außenstruktur des jeweiligen Füllkörpers gebildeten Ebenen in der gleichen Ebene angeordnet sind und die Hauptausdehnungsflächen in die gleiche Richtung weisen, wodurch eine besonders flache Anordnung der Füllkörper verwirklicht ist.

Der Füllkörper ermöglicht es dem Anwender somit, diesen als losen Füllkörper für eine regellose Schüttung zu verwenden oder mehrere derart gestaltete Füllkörper zu verbinden, um auf diese Weise einen neuen, größeren Füllkörper für eine regellose Schüttung zu schaffen.

Darüber hinaus lassen sich derart gestaltete Füllkörper zu einer flächigen Anordnung verbinden, insbesondere zu einer geordneten Anordnung von Füllkörpern verbinden, wodurch eine "strukturierte Packung" oder ein Packungselement für eine strukturierte Packung aus den Einzelfüllkörpern gebildet werden kann. Das Zusammenstecken der Füllkörper ermöglicht es dem Anwender, die aus den Füllkörpern gebildete, strukturierte Packung in ihren Abmessungen an die Gegebenheiten, beispielsweise die Innenabmessungen der Kolonne, insbesondere den Querschnitt der Kolonne, individuell und in einfacher Art und Weise anzupassen.

In einer besonders bevorzugten Ausführungsform ist vorgesehen, dass die Innenstruktur zumindest ein inneres Leitprofil aufweist, wobei das innere Leitprofil geneigt zu den Hauptausdehnungsflächen ausgebildet ist. In diesem Zusammenhang ist der Begriff "geneigt" dahingehend zu verstehen, dass das innere Leitprofil weder senkrecht noch parallel zu den Hauptausdehnungsflächen ausgebildet ist. Insbesondere ist durch die Außenstruktur auf der Seite einer Hauptausdehnungsfläche eine Ebene gebildet, wobei das innere Leitprofil geneigt zu dieser Ebene ausgebildet ist, vorzugsweise ein Winkel zwischen dem inneren Leitprofil und dieser Ebene ≥20° bis ≤70° beträgt.

Das zwischen den beiden Hauptausdehnungsflächen ausgebildete innere Leitprofil bewirkt, dass ein von der einen Hauptausdehnungsfläche in Richtung der anderen Hauptausdehnungsfläche strömendes Fluid durch das innere Leitprofil umgelenkt wird, wodurch sich die Strömungsgeschwindigkeit und die Strömungsrichtung des den Füllkörper durchströmenden Fluids verändert, was sich vorteilhaft auf den Stoff- und/oder Wärmeaustausch auswirkt.

Je nach Neigungswinkel und Form des inneren Leitprofils kann eine mehr oder weniger starke Veränderung der Strömungsgeschwindigkeit und Strömungsrichtung des Fluids erreicht werden. Das innere Leitprofil ist vorzugsweise flächig ausgebildet. Das Leitprofil kann eben, gebogen, gewellt und/oder verdrillt gestaltet sein. Es ist durchaus denkbar, dass das Leitprofil Durchtrittsöffnungen, beispielsweise in Form von Schlitzen aufweist. Durch die Durchtrittsöffnung wird der Strömungswiderstand des Füllkörpers verringert und zudem das Strömungsprofil des einströmenden Fluids lokal variiert. Zudem kann das Leitprofil auf seiner Oberfläche vorzugsweise stabförmig ausgebildete Vorsprünge aufweisen.

Dabei stellt vorzugsweise ein kleiner Winkel eine sehr flache Ausführungsform des Füllkörpers mit entsprechend hohem Strömungswiderstand dar. Ein Füllkörper mit einem Leitprofil im Bereich von 70° weist eine entsprechend größere Bauhöhe auf und zeichnet sich durch einen niedrigeren Druckverlust aus.

Durch Verbinden von mehreren Füllkörpern mittels des ersten Haltemittels und des zweiten Haltemittels kann somit eine flache Anordnung von Füllkörpern geschaffen werden, die sich im Wesentlichen in zwei Raumrichtungen erstreckt, wobei bei entsprechend identischer Ausrichtung der inneren Leitprofile der Füllkörper und/oder identischer Ausrichtung der verbundenen Füllkörper eine "strukturierte Packung" bzw. ein Packungselement geschaffen ist, die bzw. das eine identische Umlenkung des die Anordnung von der einen Hauptausdehnungsfläche der Füllkörper in Richtung der anderen Hauptausdehnungsfläche der Füllkörper durchströmenden Fluids über annähernd den gesamten Bereich der Anordnung entsprechend dem Neigungswinkel der Leitprofile bewirkt.

In einer vorteilhaften Weiterbildung der Erfindung weist der Füllkörper ein drittes Haltemittel zum Herstellen einer Verbindung zwischen dem Füllkörper und einem vierten Füllkörper auf, wobei das Haltemittel im Bereich einer der Hauptausdehnungsflächen ausgebildet und in den vierten Füllkörper einsteckbar ist.

Eine derartige Ausbildung des Füllkörpers ermöglicht es, diesen mit weiteren Füllkörpern in Richtung der Hauptausdehnungsfläche zu verbinden. Entsprechend können beispielsweise zwei identisch ausgebildete Füllkörper im Bereich der jeweiligen Hauptausdehnungsfläche derart miteinander verbunden werden, dass ein doppelt so hoher, neuer Füllkörper geschaffen ist.

Insbesondere bei Füllkörpern, die ein inneres Leitprofil aufweisen, kann durch entsprechende Ausrichtung der in Richtung der Hauptausdehnungsflächen verbundenen Füllkörper eine gezielte Umlenkung des die Füllkörper in Richtung der Hauptausdehnungsflächen durchströmenden Fluids erzielt werden. Beispielsweise können die miteinander verbunden Füllkörper identisch ausgerichtet sein, wodurch eine gleichmäßige Umlenkung des Fluidstroms, insbesondere bei übereinander angeordneten flächigen Lagen von Füllkörpern, erreicht wird. Es ist aber auch durchaus denkbar, dass die Leitprofile von übereinander angeordneten Füllkörpern und/oder die Leitprofile von übereinander angeordneten, flächigen Lagen von Füllkörpern entgegengesetzt ausgerichtet sind, insbesondere jeder zweite Füllkörper bzw. jede zweite flächige Lage von Füllkörpern identisch ausgerichtet ist, wodurch ein in die Anordnung in Richtung der Hauptausdehnungsfläche einströmendes Fluid innerhalb der Füllkörperanordnung zickzack-förmig umgelenkt wird.

Weiterhin ist denkbar, übereinander angeordnete, Leitprofile aufweisende Füllkörper derart auszurichten, dass benachbarte Füllkörper bzw. benachbarte Lagen von Füllkörpern in Richtung der Hauptausdehnungsflächen zueinander sukzessiv verdreht sind, wodurch auf Grund der Ausrichtung und Abfolge der Leitprofile eine Verdrillung des die Anordnung in Richtung der Hauptausdehnungsflächen durchströmenden Fluids erreicht wird.

Vorzugsweise sind das erste und das zweite Haltemittel derart mit dem ersten und dem zweiten Füllkörper verbindbar, dass ein flächige, insbesondere ebene Anordnung von Füllkörpern herstellbar ist, wobei das dritte Haltemittel die Verbindung dieser Anordnung mit dem vierten Füllkörper und/oder einer anderen flächigen Anordnung von Füllkörpern ermöglicht, wodurch aus derart gestalteten Füllkörpern ein Volumenkörper gebildet werden kann, insbesondere ein Volumenkörper, der mehrere flächige Lagen von Füllkörpern aufweist.

Es wird als besonders vorteilhaft angesehen, wenn das jeweilige Haltemittel von der Außenkontur nach außen hervorstehend ausgebildet ist. Dadurch ist das Verbinden des Füllkörpers mit dem jeweiligen Füllkörper erleichtert. Dabei ist es durchaus denkbar, dass die Haltemittel derart gestaltet sind, dass die Haltemittel bei Verwendung des unverbundenen Füllkörpers in einer regellosen Schüttung die Bildung von Abtropfstellen bei einer den Füllkörper benetzenden Flüssigkeit begünstigen.

Vorzugsweise weist der Füllkörper ein zu dem jeweiligen Haltemittel korrespondierendes Gegenmittel auf. Hierdurch wird insbesondere die mechanische Stabilität der Anordnung von miteinander verbundenen Füllkörpern erhöht und das Verbinden der Füllkörper erleichtert. Beispielsweise können diese Gegenmittel als Ausnehmungen oder Durchgangsöffnungen für das Haltemittel ausgebildet sein. Vorzugsweise weist der Füllkörper die gleiche Anzahl von Haltemitteln und Gegenmitteln auf.

In diesem Zusammenhang ist es durchaus denkbar, dass ein Teilbereich der Außenstruktur das Gegenmittel bildet. Beispielsweise kann das Gegenmittel durch zwei gegenüberliegende, die Seitenfläche begrenzende Längsstäbe der Außenstruktur oder einen Teilbereich dieser Längsstäbe gebildet sein.

Es ist aber auch durchaus denkbar, dass das Gegenmittel gegenüber der Außenkontur des Füllkörpers nach außen hervorsteht.

In einer besonders bevorzugten Ausführungsform ist das Haltemittel in den zu verbindenden Füllkörper, insbesondere in das Gegenmittel des zu verbindenden Füllkörpers, rastierend einsteckbar. Dadurch ist ein Lösen der Verbindung selbst bei starken mechanischen Belastungen und/oder thermischen Belastungen, wie sie beispielsweise in Stoff- und/oder Wärmeaustauschkolonnen auftreten, verhindert.

Als besonders vorteilhaft wird es angesehen, wenn die Hauptausdehnungsflächen und/oder gegenüberliegende Seitenflächen gleichsinnig gekrümmt sind. Diese Ausbildung des Füllkörpers ermöglicht es, derart gestaltete Füllkörper mit möglichst geringem Abstand der Außenkonturen der Füllkörper miteinander zu verbinden, wodurch eine möglichst große Raumerfüllung der Anordnung und somit eine möglichst große Oberfläche zwecks Stoffaustausch erzielt wird.

Als besonders vorteilhaft wird es in diesem Zusammenhang angesehen, wenn die Hauptausdehnungsflächen und/oder die Seitenflächen als Ebenen ausgebildet sind, vorzugsweise die beiden Hauptausdehnungsflächen und/oder gegenüberliegende Seitenflächen zueinander parallel ausgebildet sind.

In einer vorteilhaften Weiterbildung ist vorgesehen, dass der Füllkörper, insbesondere das jeweilige Haltemittel und/oder das jeweilige Gegenmittel, einen von der Außenkontur nach außen hervorstehenden Abstandshalter aufweist. Bei Verbindung des Füllkörpers mit einem zu verbindenden Füllkörper liegt ein Teilbereich des jeweils zu verbindenden Füllkörpers an dem Abstandshalter an, wodurch verhindert ist, dass sich die Außenkonturen und/oder Außenstrukturen der beiden Füllkörper kontaktieren, was sich negativ auf die effektive Oberfläche der Anordnung auswirken würde.

Bei Verwendung eines derart gestalteten Füllkörpers in einer regellosen Schüttung von unverbundenen Füllkörpern dienen die Abstandshalter zusätzlich als Abtropfstellen für den Füllkörper benetzende Flüssigkeiten.

Um das Einstecken des Füllkörpers zu erleichtern, weist der Füllkörper in einer bevorzugten Ausführungsform eine Positionierhilfe auf. Die Positionierhilfe kann beispielsweise als Führungsaufnahme für ein von der Außenkontur nach außen hervorstehendes Führungselement ausgebildet sein. Dabei ist es durchaus denkbar, dass das Haltemittel das Führungselement bildet. Vorzugsweise bildet die Positionierhilfe den Abstandshalter oder weist den Abstandshalter auf.

Es wird als vorteilhaft angesehen, wenn das Haltemittel und/oder das Gegenmittel verformbar ist, insbesondere elastisch verformbar ist. Dadurch ist das Einstecken des Haltemittels in das Gegenmittel erleichtert und dennoch eine stabile Verbindung, insbesondere eine rastierende Verbindung gewährleistet.

In einer besonders bevorzugten Ausführungsform weist der Füllkörper eine prismenartige oder antiprismenartige Außenkontur auf. Insbesondere ist die Außenkontur in der Art eines geraden und/oder regulären Prismas oder Antiprismas mit vorzugsweise sechseckiger Grundfläche ausgebildet, wobei die Hauptflächen des Füllkörpers die Grundfläche und die Deckfläche bilden. Derart gestaltete Füllkörper ermöglichen eine Flächenanordnung und eine Volumenanordnung der Füllkörper mit einem möglichst hohen Grad an Flächenerfüllung und Raumerfüllung, wodurch eine möglichst große effektive Oberfläche der Anordnung von derartigen Füllkörpern mit möglichst geringem Anteil von freier Fläche bzw. freiem Volumen gewährleistet ist.

Der Füllkörper ist vorzugsweise flach ausgebildet. Insbesondere weist der Füllkörper eine Abmessung von (L + B) x 0,5 = (2 bis 10) x H bei L = Länge, B = Breite und H = Höhe des Füllkörpers auf, wobei die Höhe des Füllkörpers die Abmessung des Füllkörpers von der einen Hauptausdehnungsfläche in Richtung der anderen Hauptausdehnungsfläche ist.

Um unterschiedliche Ausrichtungen des Füllkörpers zu dem vierten Füllkörper zu ermöglichen, ist das dritte Haltemittel in einer besonders bevorzugten Ausführungsform des Füllkörpers in zumindest zwei unterschiedlichen Ausrichtungen mit dem vierten Füllkörper verbindbar und/oder das dritte Haltemittel drehbar in dem vierten Füllkörper, insbesondere in dem Gegenmittel des vierten Füllkörpers, lagerbar.

Um zu gewährleisten, dass der Füllkörper mit gleichartig gestalteten Füllkörpern in unterschiedlichen Ausrichtungen verbindbar ist, ist die Gesamtheit der Haltemittel und/oder der Füllkörper und/oder die Außenkontur und/oder ein Querschnitt des Füllkörpers und/oder der Außenkontur vorzugsweise radiärsymmetrisch und/oder spiegelsymmetrisch ausgebildet. Insbesondere bildet der Querschnitt der Außenkontur ein Polygon, insbesondere ein regelmäßiges Polygon.

Es wird als vorteilhaft angesehen, wenn das erste Haltemittel und das zweite Haltemittel zueinander orthogonal ausgebildet sind. Diese Gestaltung ermöglicht es, die Füllkörper in besonders einfacher Art und Weise zu einer flächigen Lage zu verbinden. Dazu werden zunächst mehrere Füllkörper zu einer Reihe entlang des ersten Haltemittels verbunden und anschließend zwei derart gestalteten Reihen entlang der zweiten Haltemittel ineinandergesteckt.

Hinsichtlich des Verbindens der Füllkörper ist es durchaus denkbar, dass das Zusammenstecken automatisiert erfolgt.

Es wird als vorteilhaft angesehen, wenn das von der Hauptausdehnungsfläche nach außen hervorstehende Haltemittel unterschiedlich zu dem von der Seitenfläche nach außen hervorstehenden Haltemittel ausgebildet ist. Dadurch wird verhindert, dass der Füllkörper mit einem dem vierten Füllkörper zugeordneten Haltemittel mit dem ersten Füllkörper und/oder dem zweiten Füllkörper oder der Füllkörper mit dem vierten Füllkörper in einer falschen Ausrichtung, beispielsweise im Bereich einer Seitenfläche des vierten Füllkörpers anstatt im Bereich einer Hauptausdehnungsfläche des vierten Füllkörpers, verbunden wird.

Vorzugsweise sind die von den Seitenflächen nach außen hervorstehenden Haltemittel identisch ausgebildet. Dadurch ist es möglich den Füllkörper an unterschiedlichen Positionen mit dem zweiten Füllkörper und/oder dem dritten Füllkörper zu verbinden.

Vorzugsweise ist der Füllkörper einteilig ausgebildet. Ein solcher Füllkörper kann beispielsweise mittels eines Spritzgussverfahrens hergestellt werden.

Vorzugsweise besteht der Füllkörper aus Kunststoff, Metall oder Keramik.

Eine Anordnung von zumindest drei vorzugsweise identisch ausgebildete Füllkörper nach einer der vorgenannten Ausführungsformen zeichnet sich dadurch aus, dass die Füllkörper im Bereich aneinander angrenzender Seitenflächen mittels der Haltemittel miteinander verbunden sind, wobei die angeordneten Füllkörper eine flächige Lage bilden, insbesondere die durch die Außenstruktur des jeweiligen Füllkörpers gebildeten Ebenen der Füllkörper in derselben Ebene angeordnet sind. Dadurch ist durch das Verbinden der Einzelfüllkörper eine "strukturierte Packung" oder ein Packungselement für eine "strukturierte Packung" gebildet.

Als besonders vorteilhaft wird es dabei angesehen, wenn die Füllkörper der Lage regelmäßig angeordnet sind, vorzugsweise die Füllkörper und/oder die Leitprofile der Füllkörper identisch ausgerichtet sind.

In einer weiteren bevorzugten Ausführungsform der Anordnung ist durch die Anordnung ein Volumenkörper gebildet. Vorzugsweise erstreckt sich die Anordnung von dem Füllkörper, dem zweiten Füllkörper und dem dritten Füllkörper in zwei Raumrichtungen, wobei der vierte Füllkörper in einer dritten Raumrichtung, insbesondere in einer zu den beiden anderen Raumrichtungen senkrechten Raumrichtung, bezüglich des Füllkörpers angeordnet ist.

In diesem Zusammenhang wird es als besonders vorteilhaft angesehen, wenn die Anordnung zumindest zwei aneinander angrenzende flächige Lagen aufweist, insbesondere die Leitprofile von im Bereich der Hauptausdehnungsflächen angrenzenden Füllkörpern unterschiedlich ausgerichtet sind, vorzugsweise entgegengesetzt ausgerichtet sind. Hierdurch wird ein in die Anordnung in Richtung der Hauptausdehnungsfläche einströmendes Fluid innerhalb der Füllkörperanordnung zickzack-förmig umgelenkt.

Bei dem beschriebenen Füllkörper ist es durchaus möglich, dass das dritte Haltemittel und/oder das korrespondierende Gegenmittel gegenüber einer Seitenfläche des Füllkörpers und/oder das erste Haltemittel und/oder das zweite Haltemittel und/oder die korrespondierenden Gegenmittel gegenüber einer der Hauptausdehnungsflächen nach außen hervorsteht.

Bei dem beschriebenen Füllkörper ist es durchaus möglich, dass sich innenliegende Komponenten, vorliegend die Leitprofile, bis in den Bereich der Außenkontur erstrecken.

Eine Seitenfläche und/oder Hauptausdehnungsfläche des Füllkörpers kann durchaus mehrere Segmente aufweisen.

Es können somit mit dem vorgeschlagenen Füllkörper zwei unterschiedliche Einbauten, nämlich eine regellose Schüttung von Einzelfüllkörpern als auch eine geordnete bzw. "strukturierte Packung" und/oder ein Packungselement für eine "strukturierte Packung", verwirklicht werden.

Ein weiterer Vorteil des vorgeschlagenen Füllkörpers ist darin zu sehen, dass mit derart gestalteten Füllkörpern mittels Verbinden von mehreren Füllkörpern in einfacher Art und Weise eine Vielzahl von unterschiedlichen Füllkörperanordnungen mit unterschiedlichen Abmessungen und insbesondere unterschiedlichen Ausrichtungen der Innenstruktur, insbesondere der Leitprofile, verwirklicht werden kann. Derartige Anordnungen können wiederum in Form einer regellosen Schüttung verwendet werden, wodurch die Anordnungen in der regellosen Schüttung geordnete Bereiche bilden.

Weiterhin lässt sich mit dem vorgeschlagenen Füllkörper eine "strukturierte Packung" verwirklichen, die in einfacher Art und Weise und individuell an die geforderten Bedingungen, beispielsweise die Abmessungen der Kolonne oder geforderte Strömungsführung und/oder den geforderten Strömungswiderstand, anpassbar sind.

Der vorgeschlagene Füllkörper kann in einfacher Art und Weise hergestellt werden, beispielsweise mittels eines Spritzgussverfahrens.

Dadurch, dass sich mit dem gleichen Füllkörper unterschiedliche weitere Füllkörper sowie "strukturierte Packungen" und/oder Packungselemente für "strukturierte Packungen" mittels Verbinden der Füllkörper bilden lassen, werden Kosten für die Herstellung individueller Spritzgusswerkzeuge für unterschiedliche Füllkörpertypen oder Packungselemente, insbesondere aufwendige Spritzgusswerkzeuge für Füllkörper mit großen Abmessungen, sowie Kosten für die Lagerung und Vorhaltung unterschiedlicher Füllkörpertypen und/oder unterschiedlicher Packungselemente eingespart.

Weitere Merkmale der Erfindung sind in der nachfolgenden Beschreibung der Figuren sowie den Figuren selbst dargestellt, wobei bemerkt wird, dass alle Einzelmerkmale und alle Kombinationen von Einzelmerkmalen erfindungswesentlich sind.

In den Figuren ist die Erfindung anhand bevorzugter Ausführungsformen dargestellt, ohne hierauf beschränkt zu sein.

Die Figuren zeigen:
- Fig. 1: ein erstes Ausführungsbeispiel des Füllkörpers in einer perspektivischen Ansicht,
- Fig. 2: den Füllkörper gemäß Fig. 1 in einer Ansicht gemäß dem Pfeil II in Fig. 4,
- Fig. 3: den Füllkörper in einer Ansicht gemäß dem Pfeil III in Fig. 4,
- Fig. 4: den Füllkörper in einer Ansicht gemäß dem Pfeil IV in Fig. 2,
- Fig. 5: eine Anordnung von vier Füllkörpern gemäß Fig. 1 in einer Explosionsdarstellung,
- Fig. 6: einen aus einer Anordnung von mehreren miteinander verbundenen, identisch ausgebildeten Füllkörpern gebildeten Volumenkörper in einer Ansicht gemäß dem Pfeil VI in Fig. 7,
- Fig. 7: die Anordnung in einer Ansicht gemäß dem Pfeil VII in Fig. 6,
- Fig. 8: eine Schnittansicht der Anordnung gemäß der Linie VIII in Fig. 7,
- Fig. 9: eine Schnittansicht der Anordnung gemäß der Linie IX in Fig. 7,
- Fig. 10: eine Schnittansicht der Anordnung gemäß der Linie X in Fig. 6,
- Fig. 11: ein zweites Ausführungsbeispiel des Füllkörpers in einer perspektivischen Ansicht,
- Fig. 12: den Füllkörper gemäß Fig. 11 in einer Ansicht gemäß dem Pfeil XII in Fig. 14,
- Fig. 13: den Füllkörper in einer Ansicht gemäß dem Pfeil XIII in Fig. 14,
- Fig. 14: den Füllkörper in einer Ansicht gemäß dem Pfeil XIV in Fig. 13,
- Fig. 15: ein drittes Ausführungsbeispiel des Füllkörpers in einer perspektivischen Ansicht,
- Fig. 16: den Füllkörper gemäß Fig. 15 in einer Ansicht gemäß dem Pfeil XVI in Fig. 18,
- Fig. 17: den Füllkörper in einer Ansicht gemäß dem Pfeil XVII in Fig. 18,
- Fig. 18: den Füllkörper in einer Ansicht gemäß dem Pfeil XVIII in Fig. 17,
- Fig. 19: ein viertes Ausführungsbeispiel des Füllkörpers in einer perspektivischen Ansicht,
- Fig. 20: den Füllkörper gemäß Fig. 19 in einer Ansicht gemäß dem Pfeil XX in Fig. 22,
- Fig. 21: den Füllkörper in einer Ansicht gemäß dem Pfeil XXI in Fig. 22,
- Fig. 22: den Füllkörper in einer Ansicht gemäß dem Pfeil XXII in Fig. 21,
- Fig. 23: ein fünftes Ausführungsbeispiel des Füllkörpers in einer perspektivischen Ansicht,
- Fig. 24: den Füllkörper gemäß Fig. 23 in einer Ansicht gemäß dem Pfeil XXIV in Fig. 26,
- Fig. 25: den Füllkörper in einer Schnittansicht gemäß Linie XXV in Fig. 26,
- Fig. 26: den Füllkörper in einer Ansicht gemäß dem Pfeil XXVI in Fig. 24
- Fig. 27: ein sechstes Ausführungsbeispiel des Füllkörpers in einer perspektivischen Ansicht,
- Fig. 28: den Füllkörper gemäß Fig. 27 in einer Ansicht gemäß dem Pfeil XXVIII in Fig. 30,
- Fig. 29: den Füllkörper in einer Ansicht gemäß Linie XXIX in Fig. 30,
- Fig. 30: den Füllkörper in einer Ansicht gemäß dem Pfeil XXX in Fig. 29.

Die jeweilige in den Figuren veranschaulichte Ausführungsform des Füllkörpers 1a findet mit einer Vielzahl entsprechender Füllkörper 1a Verwendung als Einzelfüllkörper in einer regellosen Schüttung, als miteinander verbundene Anordnung von mehreren, vorzugsweise identisch ausgebildeten Füllkörpern 1 a, 1 b, 1 c, 1 d in einer regellosen Schüttung oder als miteinander verbundene Füllkörper 1 a als "strukturierte Packung" oder als Packungselement für eine "strukturierte Packung" Anwendung.

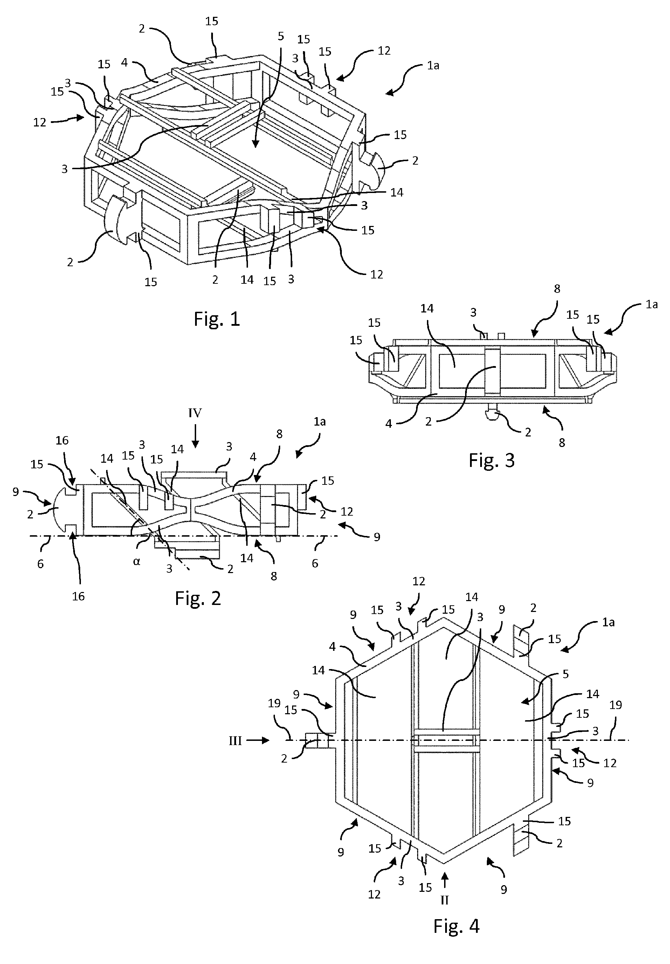

Die in den Fig. 1 bis 5 veranschaulichte Gestaltung eines ersten Ausführungsbeispiels des Füllkörpers 1 a weist eine gitterförmige Außenstruktur 4 auf, wobei durch die Außenstruktur 4 eine Außenkontur 8, 9 des Füllkörpers 1a mit zwei einander abgewandten Hauptausdehnungsflächen 8 und mit sechs an die Hauptausdehnungsflächen 8 angrenzenden Seitenflächen 9 gebildet ist. Eine Innenstruktur 5 weist drei Leitprofile 14 auf, wobei diese Leitprofile 14 identisch geneigt zu den Hauptausdehnungsflächen 8 ausgebildet sind.

Auf der Seite einer der Hauptausdehnungsflächen 8 ist durch die Außenstruktur 4 eine Ebene 6 gebildet, wobei das Leitprofil 14 geneigt zu der Ebene 6 ausgebildet ist, wobei der Winkel α zwischen dem Leitprofil 14 und der Ebene 6 etwa 45° beträgt.

Der Füllkörper 1 a weist mehrere von der Außenkontur 8, 9 nach außen hervorstehende Haltemittel 2 und mehrere zu den Haltemitteln 2 korrespondierende Gegenmittel 3 zum Herstellen einer Verbindung zwischen dem Füllkörper 1a und weiteren Füllkörpern 1 b, 1 c, 1 d auf. Ein erstes Haltemittel 2 ist im Bereich einer ersten Seitenfläche 9 ausgebildet und in einen zweiten Füllkörper 1 b einsteckbar, ein zweites Haltemittel 2 ist im Bereich einer zweiten Seitenfläche 9 ausgebildet und in einen dritten Füllkörper 1 c einsteckbar und ein drittes Haltemittel 2 ist im Bereich einer der Hauptausdehnungsflächen 9 ausgebildet und in einen vierten Füllkörper 1d einsteckbar. Des Weiteren weist der Füllkörper 1 a ein viertes Haltemittel 2 auf, das im Bereich einer dritten Seitenfläche 9 ausgebildet ist und in einen fünften Füllkörper einsteckbar ist.

Im Bereich der übrigen Seitenflächen 9 und der anderen Hauptausdehnungsfläche 8 weist der Füllkörper 1 a das zu dem jeweiligen Haltemittel 2 korrespondierendes Gegenmittel 3 auf, wobei das korrespondierende Gegenmittel 3 im Bereich der Seitenflächen 9 durch einen Teilbereich der Außenstruktur 4 gebildet ist.

Die von den Seitenflächen 9 nach außen hervorstehenden Haltemittel 2 sind identisch ausgebildet. Ferner sind die dazu korrespondierenden Gegenmittel 3 identisch ausgebildet. Das dritte Haltemittel 2, das von der Hauptausdehnungsfläche 8 nach außen hervorstehend ausgebildet ist, ist unterschiedlich zu dem von der Seitenfläche 9 nach außen hervorstehenden Haltemittel 2 ausgebildet.

Sowohl die Hauptausdehnungsflächen 8 als auch die Seitenflächen 9 sind als Ebenen ausgebildet, wobei jeweils gegenüberliegende Seitenflächen 9 und die beiden gegenüberliegenden Hauptausdehnungsflächen 8 jeweils zueinander parallel ausgebildet sind.

Die Außenkontur 8, 9 des Füllkörpers 1 a weist die Form eines geraden regulären Prismas mit einer sechseckigen Grundfläche auf, wobei die Hauptflächen 8 die Grundfläche und eine Deckfläche des Prismas bilden.

Der Füllkörper 1a ist flach ausgebildet, wobei die Länge und die Breite des Füllkörpers 1 a jeweils etwa das 3,5-fache der Höhe des Füllkörpers 1 a beträgt, wobei die Höhe des Füllkörpers 1a die Abmessung des Füllkörpers 1a von der einen Hauptausdehnungsfläche 8 in Richtung der anderen Hauptausdehnungsfläche 8 ist.

Die Außenkontur 8, 9 und die Gesamtheit der Haltemittel 2 und Gegenmittel 3 sind spiegelsymmetrisch zu einer Symmetrieebene 19 des Füllkörpers 1a ausgebildet, wobei sich diese Symmetrieebene 19 im Wesentlichen senkrecht zu den beiden Hauptausdehnungsflächen 8 erstreckt.

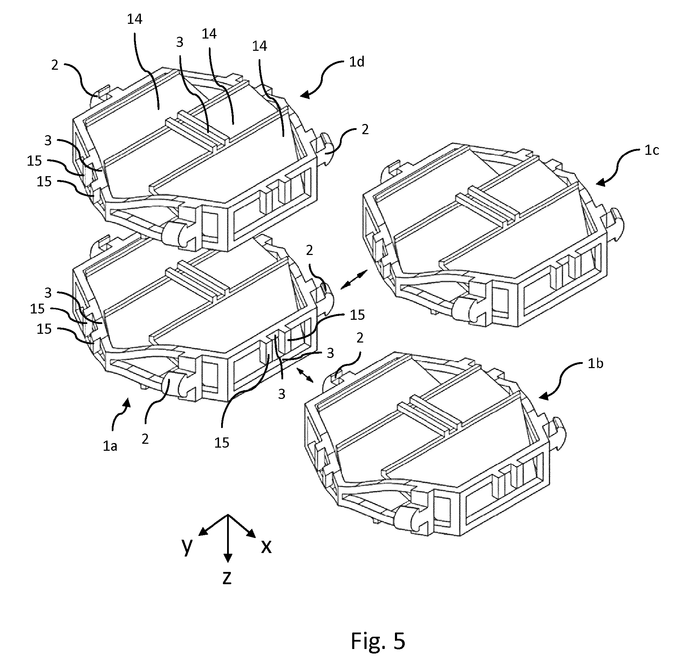

Wie in der Explosionsdarstellung in Fig. 5 dargestellt, ist das erste Haltemittel 2 des Füllkörpers 1 a in einer ersten Raumrichtung X in einen zweiten Füllkörper 1 b einsteckbar, das zweite Haltemittel 2 entlang einer zweiten Raumrichtung Y in einen dritten Füllkörper 1 c einsteckbar und das dritte Haltemittel 2 entlang einer dritten Raumrichtung Z in einen vierten Füllkörper 1d einsteckbar, wobei die Raumrichtungen X, Y, Z jeweils senkrecht zu den beiden anderen Raumrichtungen X, Y, Z ausgebildet sind.

Die in der Fig. 5 dargestellten vier Füllkörper 1a, 1b, 1c, 1d sind identisch ausgebildet und identisch ausgerichtet. Die Haltemittel 2 sind jeweils in die korrespondierende Gegenmittel 3 der zu verbindenden Füllkörper 1a, 1b, 1c, 1d einsteckbar.

Der Füllkörper 1 a weist von der Außenkontur 8, 9 nach außen hervorstehende Abstandshalter 15 auf, wobei die im Bereich der Seitenflächen 9 ausgebildeten Haltemittel 2 den Abstandshalter 15 aufweisen. Im Bereich der Hauptausdehnungsfläche 8 ist der Abstandshalter 15 durch das Gegenmittel 3 gebildet.

Ferner weisen die Seitenflächen 9 des Füllkörpers 1a, die kein Haltemittel 2 aufweisen, zwei parallel verlaufende Vorsprünge auf, wobei diese Vorsprünge sowohl als Abstandshalter 15 als auch als eine Positionierhilfe 12 für das Haltemittel 2 dienen. Zwecks Verbinden von zwei Füllkörpern 1a, 1b, 1c im Bereich der Seitenflächen 9 wird das Haltemittel 2 zunächst in die beiden Vorsprünge eingebracht und anschließend in Richtung des zu verbindenden Füllkörpers 1 b, 1c verschoben, wobei die beiden Vorsprünge das Haltemittel 2 beim Verschieben der Füllkörper 1a, 1b, 1c zueinander führen und im verbundenen Zustand der Füllkörper 1a, 1b, 1c ein Verschieben der Füllkörper 1a, 1b, 1c senkrecht zur Einsteckrichtung verhindern.

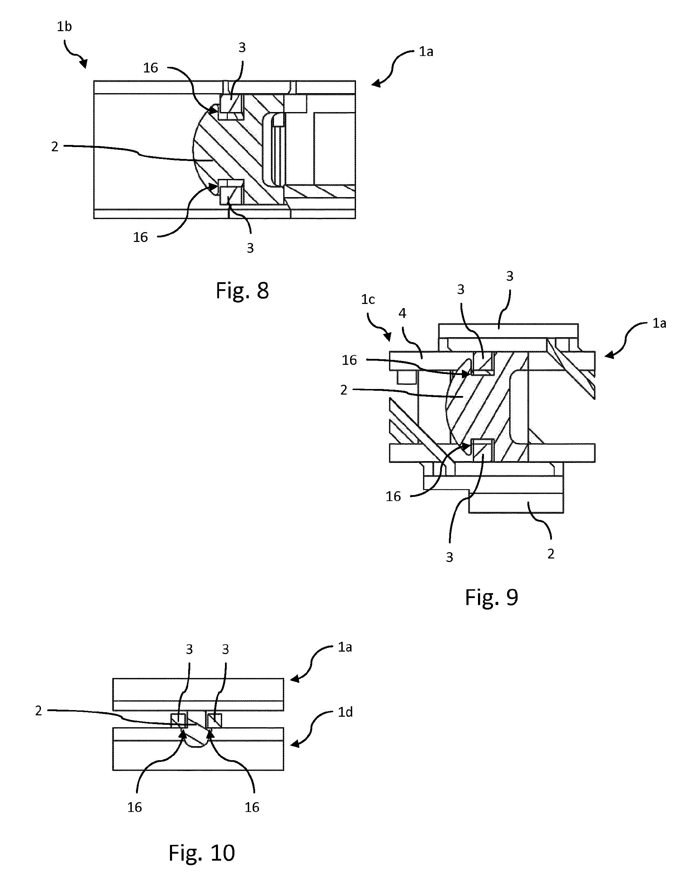

Die Haltemittel 2 des Füllkörpers 1a sind als Clip ausgebildet, wobei das Haltemittel 2 senkrecht zur Einsteckrichtung zwei gegenüberliegende Ausnehmungen 16 aufweist. Zwecks Verbinden des Füllkörpers 1 a mit den weiteren Füllkörpern 1b, 1c, 1d werden die Füllkörper 1a, 1b, 1c, 1d in Richtung des jeweiligen Haltemittels 2 zueinander verschoben, wobei beim Kontaktieren des Haltemittels 2 und des Gegenmittels 3 das Gegenmittel 3 entlang der rampenartigen Außenfläche des Haltemittels 2 elastisch verformt wird, vorliegend zwei gegenüberliegende Stäbe des Gegenmittels 3 auseinandergebogen werden, wobei im Bereich der jeweiligen Seitenfläche 9 die Stäbe einen Teilbereich der Außenstruktur 4 bilden. Wie in den Figuren 8 bis 10 dargestellt, sind die Stäbe des Gegenmittels 3 nach Überwindung der Rampe in den Ausnehmungen 16 angeordnet, wobei ein Teilbereich des Haltemittels 2, der die Rampe aufweist, das Gegenmittel 3 auf der dem Füllkörper 1 a abgewandten Seite hintergreift, wodurch eine Rastverbindung zwischen den beiden Füllkörpern 1a, 1b, 1c, 1d gebildet ist.

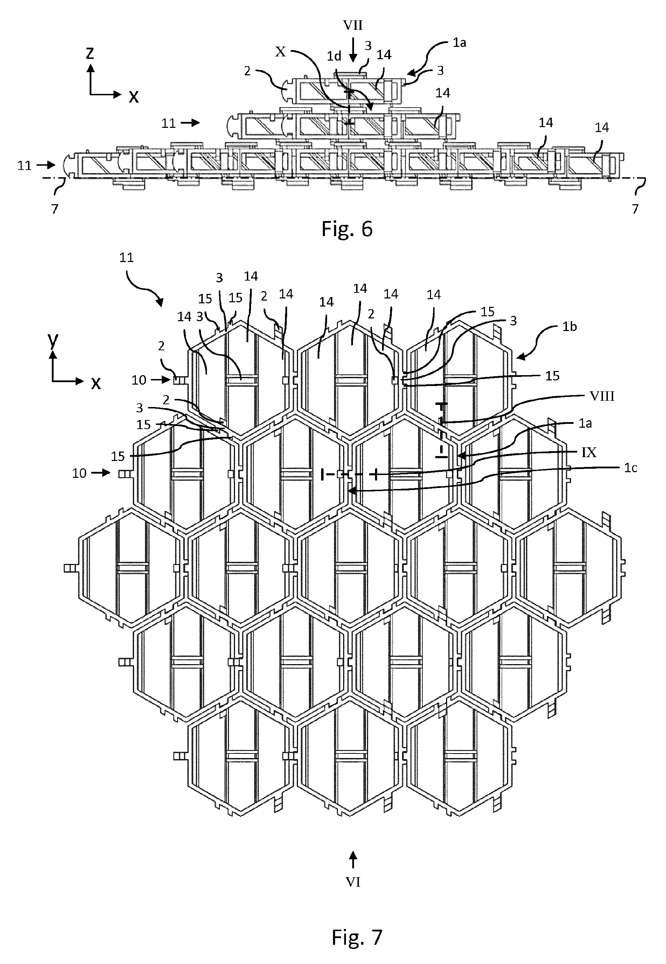

Eine Anordnung von identisch ausgebildeten Füllkörpern 1a, 1b, 1c, 1d ist in den Fig. 6 und 7 gezeigt, wobei sich die Füllkörper 1 a von der ersten Ausführungsform lediglich dadurch unterscheiden, dass alle Seitenflächen 9 rechteckig ausgebildet sind. Die Außenkontur 8, 9 des jeweiligen Füllkörpers 1a, 1b, 1c, 1d ist in der Art eines geraden regulären Prismas mit einer sechseckigen Grundfläche ausgebildet. Dabei ist der jeweilige Füllkörper 1a, 1b, 1c, 1d im Bereich jeder Seitenfläche 9 und jeder Hauptausdehnungsfläche 8 mit einem weiteren Füllkörper 1a, 1b, 1c, 1d verbindbar.

Im Folgenden ist zu beachten, dass ein Füllkörper 1a, 1b, 1c, 1d der Anordnung abhängig davon, welche an den jeweiligen Füllkörper 1a, 1b, 1c, 1d angrenzende Füllkörper 1a, 1b, 1c, 1d berücksichtigt werden, dieser Füllkörper 1a, 1b, 1c, 1d entweder den Füllkörper 1a, den zweiten Füllkörper 1b, den dritten Füllkörper 1c oder den vierten Füllkörper 1d bildet.

Die Anordnung weist zwei aneinander angrenzende flächige Lagen 11 von Füllkörpern 1a, 1b, 1c auf, wobei eine flächige Lage 11 dadurch gebildet ist, dass die Füllkörper 11 im Bereich aneinander angrenzender Seitenflächen 9 mittels der in die Gegenmittel 3 eingesteckten Haltemittel 2 miteinander verbunden sind, wobei die Ebenen 6 der angeordneten Füllkörper 1a, 1b, 1c einer flächigen Lage 11 in derselben Ebene 7 angeordnet sind. Durch das Verbinden der Füllkörper 1a, 1b, 1c, 1d im Bereich der Seitenflächen 9 und Hauptausdehnungsflächen 9 ist eine geordnete Packung von Füllkörpern 1a, 1b, 1c, 1d geschaffen, die eine "strukturierte Packung" oder ein Packungselement für eine "strukturierte Packung" bildet.

Die Füllkörper 1a, 1b, 1c der jeweiligen Lage 11 und die Füllkörper 1a, 1b, 1c unterschiedlicher Lagen 11 sind identisch ausgerichtet. Die aneinander angrenzenden Lagen 11 sind jeweils mittels der dritten Haltemittel 2 miteinander verbunden.

Eine detaillierte Ansicht des Zusammenwirkens des ersten Haltemittels 2, des zweiten Haltemittels 2 und des dritten Haltemittels 2 mit dem jeweiligen Gegenmittel 3 eines verbundenen Füllkörpers 1a, 1b, 1c, 1d zeigen die Fig. 8 bis 9 in einer Schnittansicht.

Zwecks Bildung einer flächigen Lage 11 ist es durchaus denkbar, dass mehrere Füllkörper 1a, 1b mittels der ersten Haltemittel 2 zunächst in einem ersten Schritt in der ersten Raumrichtung X ineinandergesteckt werden zwecks Bildung einer ersten Reihe 10 von Füllkörpern 1a, 1b in einem zweiten Schritt auf die gleiche Weise eine zweite Reihe 10 von Füllkörpern 1a, 1b gebildet wird und anschließend in einem dritten Schritt die zwei Reihen 10 von Füllkörpern 1a, 1b parallel zueinander ausgerichtet und anschließend in der zweiten Raumrichtung Y zueinander verschoben werden, wobei durch das Verschieben das zweite Haltemittel 2 des jeweiligen Füllkörpers 1a, 1b einer Reihe 10 in die Füllkörper 1a, 1b der anderen Reihe eingesteckt wird und die beiden Reihen 10 auf diese Weise miteinander verbunden werden, wobei die Füllkörper 1a, 1b einer Reihe 10 für den jeweiligen Füllkörper 1a, 1b der anderen Reihe 10 den dritten Füllkörper 1c bilden.

Dieses Verfahren zum Verbinden der Füllkörper 1a, 1b, 1c zu einer flächigen Lage 11 wird dadurch erleichtert, dass das erste Haltemittel 2 und das zweite Haltemittel 2 zueinander orthogonal ausgebildet sind.

Im Anschluss an die Bildung von mehreren flächigen Lagen 11 von Füllkörpern 1a, 1b, 1c können diese flächigen Lagen 11 mittels des dritten Haltemittels 2 miteinander verbunden werden, wobei die Füllkörper 1a, 1b, 1c einer Lage 11 für den jeweiligen Füllkörper 1a, 1b, 1c der anderen Lage 11 den vierten Füllkörper 1 d bilden.

Wie den Fig. 7 und 8 zu entnehmen ist, ist durch die Abstandshalter 15 sichergestellt, dass die aneinander angrenzenden Seitenflächen 9 zweier benachbarter Füllkörper 1a, 1b, 1c bzw. die aneinander angrenzenden Hauptausdehnungsflächen 8 benachbarter Füllkörper 1a, 1 d nicht unmittelbar aneinander anliegen. Dadurch ist eine größtmögliche effektive Oberfläche der Anordnung sichergestellt.

Bei der in den Fig. 6 und 7 dargestellten Anordnung sind die Leitprofile 14 innerhalb einer Lage 11 und die Leitprofile 14 unterschiedlicher Lagen 11 identisch geneigt ausgebildet, sodass ein in Z-Richtung in die Anordnung einströmendes Fluid innerhalb der Anordnung in die negative X-Richtung umgelenkt wird.

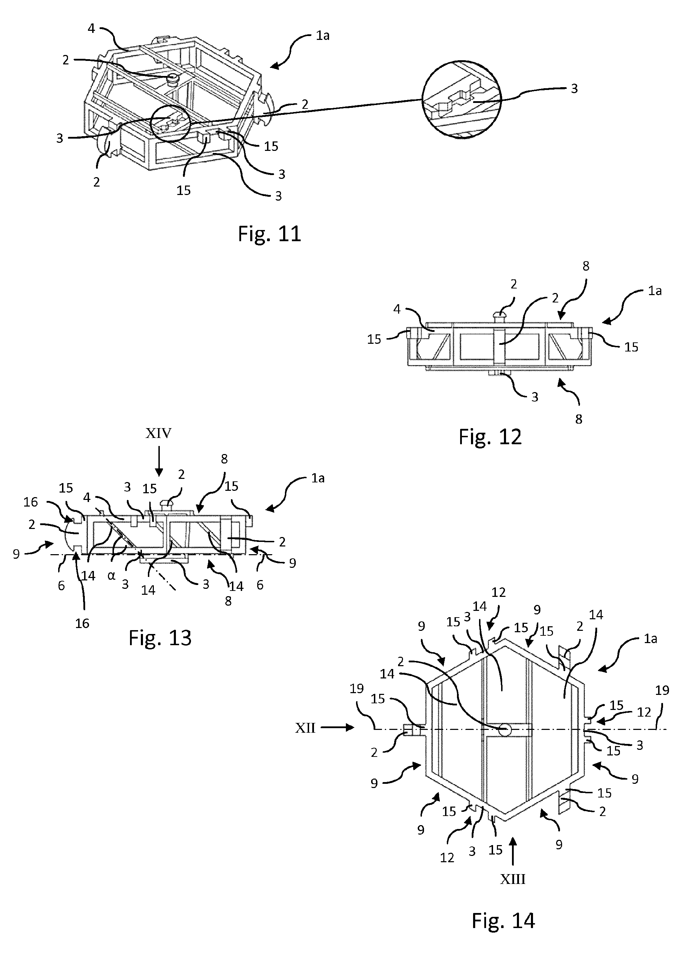

Die Fig. 11 bis 14 zeigen ein zweites Ausführungsbeispiel des Füllkörpers 1a, wobei sich dieses Ausführungsbeispiel von dem ersten Ausführungsbeispiel im Wesentlichen dadurch unterscheidet, dass die Seitenflächen 9 als rechteckige ebene Flächen ausgebildet sind. Des Weiteren ist das dritte Haltemittel 2 des Füllkörpers 1 a rotationssymmetrisch ausgebildet, wobei das dritte Haltemittel 2 an einem der Hauptausdehnungsfläche 8 abgewandten Ende einen Vorsprung aufweist. Das zu dem dritten Haltemittel 2 korrespondierende Gegenmittel 3, welches im Bereich der anderen Hauptausdehnungsfläche 8 ausgebildet ist, weist eine im Wesentlichen quadratische Durchgangsöffnung zur Aufnahme des dritten Haltemittels 2 auf. Wie insbesondere der Detailansicht in der Fig. 11 zu entnehmen ist, ist die Durchgangsöffnung dabei durch zwei nachgiebige Streben gebildet.

Diese Gestaltung des dritten Haltemittels 2 und des dazu korrespondierenden Gegenmittels 3 ermöglicht es, zwei Füllkörper 1a, 1 d in unterschiedlichen Ausrichtungen zueinander miteinander zu verbinden. Zudem gewährleistet diese Gestaltung, dass bei miteinander verbundenen Füllkörpern 1a, 1d das dritte Haltemittel 2 drehbar in dem Gegenmittel 3 und somit drehbar in dem vierten Füllkörper 1 d gelagert ist, wodurch die Ausrichtung der beiden Füllkörper 1a, 1 d zueinander auch nach dem Verbinden der Füllkörper 1a, 1 d variiert werden kann.

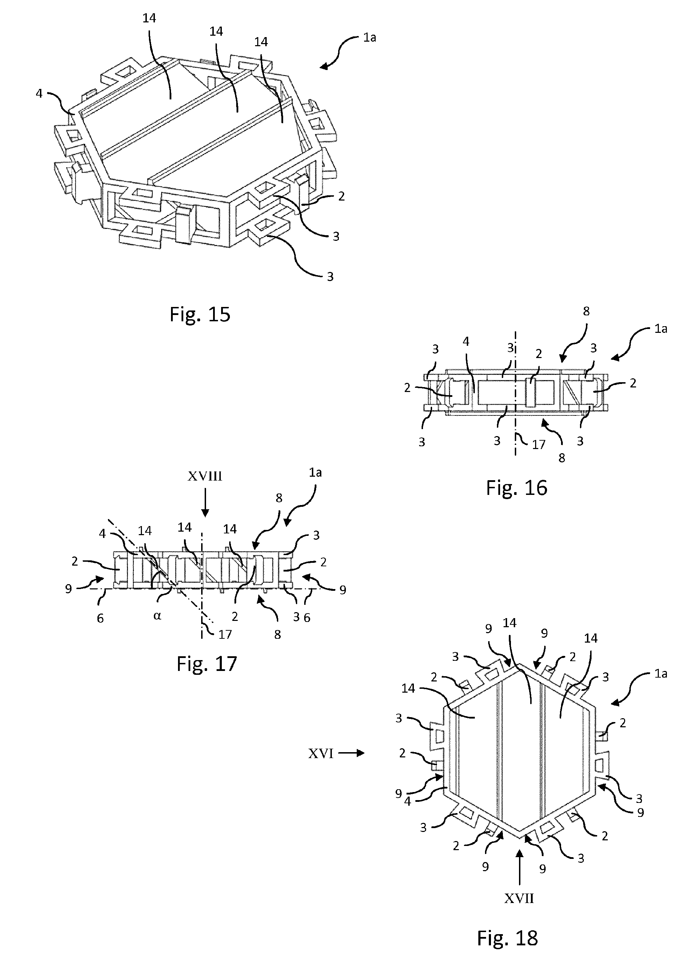

Ein in den Fig. 15 bis 18 dargestelltes drittes Ausführungsbeispiel des Füllkörpers 1a unterscheidet sich von den vorigen Ausführungsbeispielen im Wesentlichen dadurch, dass dieses Ausführungsbeispiel kein drittes Haltemittel 2 und entsprechend auch kein zu dem dritten Haltemittel 2 korrespondierendes Gegenmittel 3 aufweist.

Dementsprechend ist ein derart gestalteter Füllkörper 1 a mit weiteren, vorzugsweise identisch gestalteten Füllkörpern 1 b, 1 c lediglich in zwei Raumrichtungen X, Y verbindbar. Der Füllkörper 1 a weist an jeder der sechs Seitenflächen 9 ein Haltemittel 2 und ein Gegenmittel 3 auf, wobei die Haltemittel 2 und die Gegenmittel 3 jeweils identisch und im Wesentlichen orthogonal zu der jeweiligen Seitenfläche 9 ausgebildet sind. Die Außenkontur 8, 9 und die Gesamtheit der Haltemittel 2 und Gegenmittel 3 sind radiärsymmetrisch zu einer Symmetrieachse 17 des Füllkörpers 1a ausgebildet, wobei sich diese Symmetrieachse 17 von der einen Hauptausdehnungsfläche 8 in Richtung der anderen Hauptausdehnungsfläche 8 erstreckt.

Aufgrund der identischen Gestaltung der Haltemittel 2 und Gegenmittel 3 sowie der 6-fachen Radiärsymmetrie ist jede der sechs Seitenflächen 9 des Füllkörpers 1 a mit jeder der sechs Seitenflächen 9 eines identisch gestalteten Füllkörpers 1 b verbindbar, wodurch eine Vielzahl von unterschiedlichen Ausrichtungen der beiden Füllkörper 1 a, 1 b zueinander verwirklicht werden kann.

Im Gegensatz zu den vorigen Ausführungsbeispielen ist das Gegenmittel 3 nicht durch einen Teilbereich der Außenstruktur 4 gebildet, sondern durch zwei von der Seitenfläche 9 nach außen hervorstehende Vorsprünge, die jeweils eine Durchgangsöffnung für einen Vorsprung des korrespondierenden Haltemittels 2 aufweisen, wodurch beim Einstecken des Haltemittels 2 des Füllkörpers 1a in das Gegenmittel 3 des zu verbindenden Füllkörpers 1 b eine rastierende Verbindung verwirklicht wird.

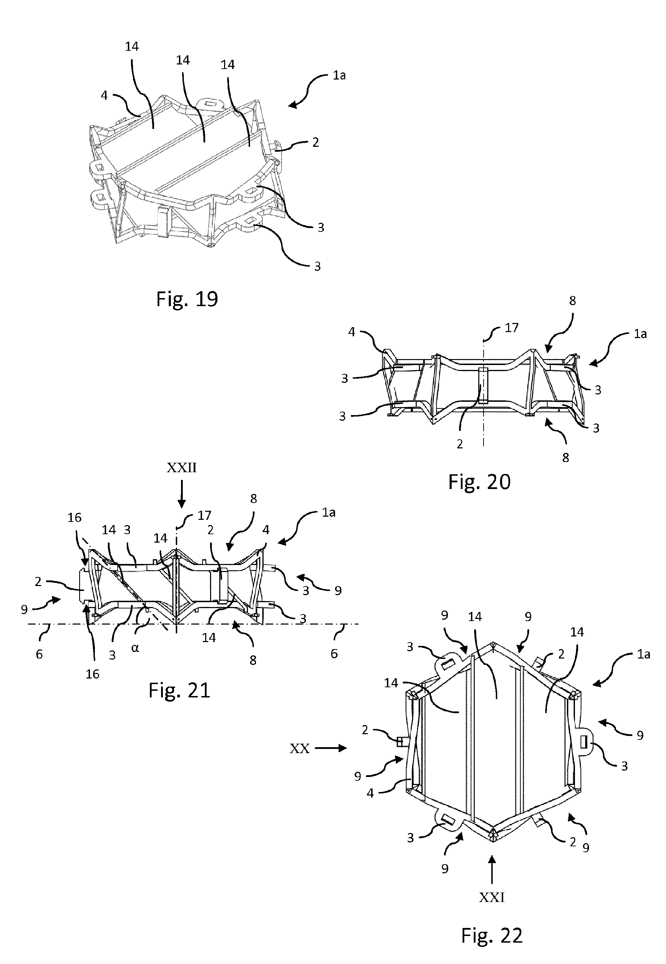

Die Fig. 19 bis 22 zeigen ein viertes Ausführungsbeispiel der Erfindung, wobei sich dieses Ausführungsbeispiel dadurch auszeichnet, dass drei der sechs Seitenflächen 9 das Haltemittel 2 und die drei anderen Seitenflächen 9 das korrespondierende Gegenmittel 3 aufweisen, wobei die Haltemittel 2 und die Gegenmittel 3 jeweils identisch ausgebildet sind. Dabei weisen die an die Seitenfläche mit Haltemittel 2 angrenzenden Seitenflächen 9 jeweils das Gegenmittel 3 auf. Der Füllkörper 1 a weist ferner eine 3-fache Radiärsymmetrie auf.

Im Gegensatz zu den vorigen Ausführungsbeispielen sind die Hauptausdehnungsflächen 8 und die Seitenflächen 9 nicht eben, sondern gekrümmt ausgebildet. Weiterhin weist die Außenstruktur 4 im Bereich der beiden Hauptausdehnungsflächen 8 jeweils sechs Vorsprünge auf.

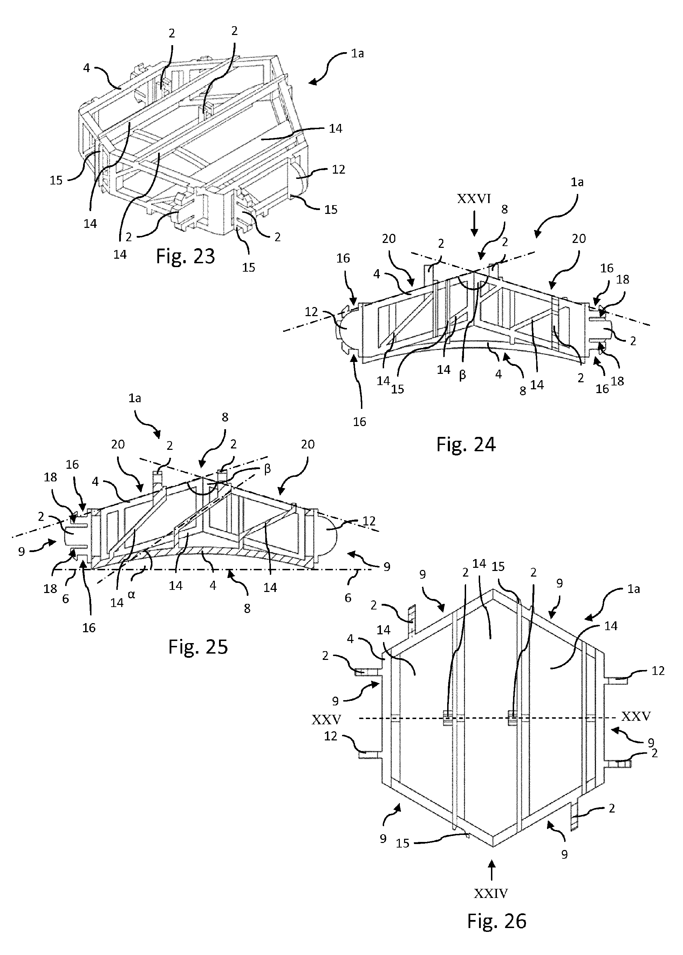

Ein in den Fig. 23 bis 26 dargestelltes fünftes Ausführungsbeispiel des Füllkörpers 1a ist im Wesentlichen flach ausgebildet, wobei die beiden gegenüberliegenden Hauptausdehnungsflächen 8 gleichsinnig gekrümmt ausgebildet sind. Dabei ist eine der Hauptausdehnungsflächen 8 durch zwei zueinander gewinkelt angeordnete, im Wesentlichen jeweils eben ausgebildete Segmente 20 gebildet, wobei die beiden Segmente 20 einen stumpfen Winkel βvon etwa 145° einschließen.

Die an den Seitenflächen 9 ausgebildeten, identisch gestalteten vier Haltemittel 2 weisen jeweils zwei gegenüberliegende Ausnehmungen 16 zum rastierenden Einstecken in den zu verbindenden Füllkörper 1b, 1c auf. Weiterhin weisen die Haltemittel 2 jeweils zwei sich von einem der Seitenfläche 9 abgewandten Ende des jeweiligen Haltemittels 2 in Richtung der Seitenfläche 9 erstreckende Schlitze 18 auf. Diese beiden Schlitze 18 gewährleisten, dass beim Einführen des Haltemittels 2 in den zu verbindenden Füllkörper 1b, 1c sich der jeweilige Teilbereich, der die eine Ausnehmung 16 aufweist, in Richtung des Teilbereichs, der die andere Ausnehmung 16 aufweist verformt, wodurch der Abstand der beiden Teilbereiche und somit der Abstand der beiden Ausnehmungen 16 verringert. Dadurch wird das Einführen des Haltemittels 2 des Füllkörpers 1 a in den zu verbindenden Füllkörper 1b, 1c erleichtert.

Der Füllkörper 1a weist zudem im Bereich zweier einander abgewandter Seitenflächen 9 jeweils eine Positionierhilfe 12 auf. Die Positionierhilfe 12 ist im Wesentlichen flach und halbkreisförmig sowie von der jeweiligen Seitenfläche 9 nach außen hervorstehend ausgebildet. Der Durchmesser des Halbkreises ist geringfügig kleiner als der Abstand zweier gegenüberliegender Längsstäbe der Außenstruktur 4. Beim Verbinden des Füllkörpers 1a mit einem Füllkörper 1b, 1c wird die Positionierhilfe 12 im Bereich der Seitenfläche 9 des zu verbindenden Füllkörpers 1b, 1c zwischen die Längsstäbe der Außenstruktur 4 in den Füllkörper 1b, 1c eingeschoben, wodurch die Positionierung der beiden Füllkörper 1a, 1b, 1c zueinander erleichtert ist.

Der Füllkörper 1a weist mehrere Abstandshalter 15 auf, wobei der Füllkörper 1a sowohl separat ausgebildete Abstandshalter 15 als auch in den Haltemitteln 2 und den Positionierhilfen 12 ausgebildete Abstandshalter 15 aufweist.

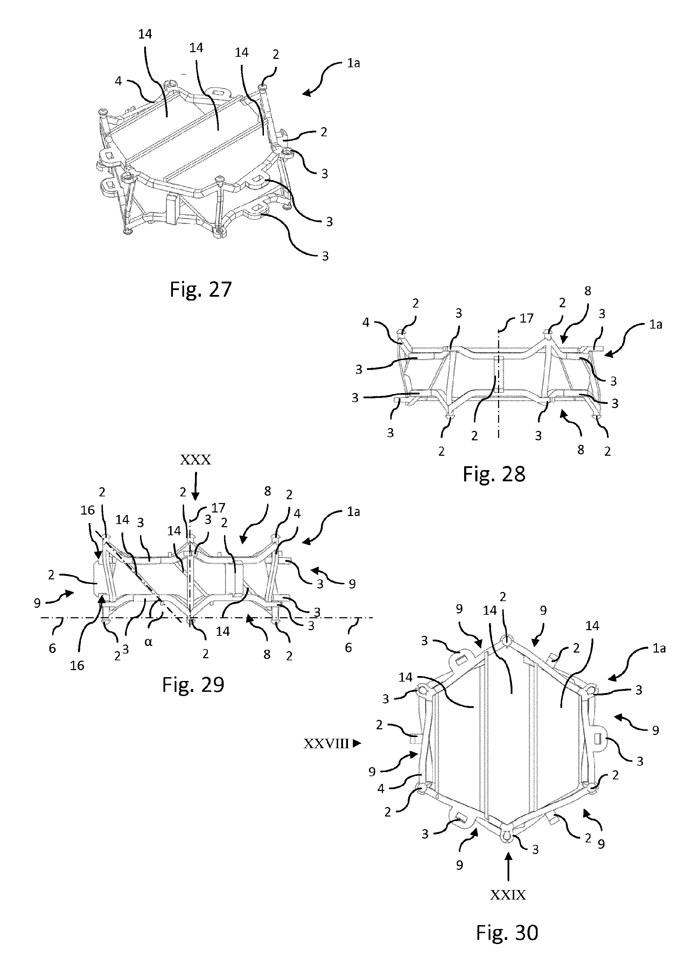

Ein in den Fig. 27 bis 30 dargestelltes sechstes Ausführungsbeispiel des Füllkörpers 1a unterscheidet sich von dem vierten Ausführungsbeispiel im Wesentlichen dadurch, dass der Füllkörper 1a mehrere identisch ausgebildete dritte Haltemittel 2 und dazu korrespondierende identisch ausgebildete Gegenmittel 3 aufweist, wobei sowohl die eine Hauptausdehnungsfläche 8 als auch die andere Hauptausdehnungsfläche 8 sowohl Haltemittel 2 als auch Gegenmittel 3 aufweisen.

Die Haltemittel 2 und Gegenmittel 3 sind jeweils in einem Kontaktierungsbereich von zwei Seitenflächen 9 und einer der Hauptausdehnungsflächen 8 ausgebildet.

Das jeweilige Haltemittel 2 steht gegenüber der jeweiligen Hauptausdehnungsfläche 8 hervor und weist an einem der Hauptausdehnungsfläche 8 abgewandten Ende einen Vorsprung auf.

Die zu dem dritten Haltemittel 2 korrespondierenden Gegenmittel 3 stehen jeweils gegenüber einer jeweiligen Seitenfläche 9 nach außen hervor und weisen eine Durchgangsöffnung zum rastierenden Einstecken des dritten Haltemittels 2 auf.

### Bezugszeichenliste

- 1a: Füllkörper
- 1b: zweiter Füllkörper
- 1c: dritter Füllkörper
- 1d: vierter Füllkörper
- 2: Haltemittel
- 3: Gegenmittel
- 4: Außenstruktur
- 5: Innenstruktur
- 6: Ebene des Füllkörpers
- 7: Ebene
- 8: Hauptausdehnungsfläche
- 9: Seitenfläche
- 10: Reihe
- 11: Lage
- 12: Positionierhilfe
- 13: Verbindungselement
- 14: Leitprofil
- 15: Abstandshalter
- 16: Ausnehmung
- 17: Symmetrieachse
- 18: Schlitz
- 19: Symmetrieebene
- 20: Segment
- X: erste Raumrichtung
- Y: zweite Raumrichtung
- Z: dritte Raumrichtung
- α: Winkel
- β: Winkel

## Patentansprüche

1. Füllkörper (1a), der von einer Gas- und/oder Flüssigkeitsströmung durchsetzbar ist, insbesondere zur Verwendung für Stoff- und/oder Wärmeaustauschkolonnen, aufweisend eine Außenstruktur (4), eine Innenstruktur (5), ein erstes Haltemittel (2) zum Herstellen einer Verbindung zwischen dem Füllkörper (1a) und einem zweiten Füllkörper (1 b) sowie aufweisend ein zweites Haltemittel (2) zum Herstellen einer Verbindung zwischen dem Füllkörper (1 a) und einem dritten Füllkörper (1 c), wobei das jeweilige Haltemittel (2) in den jeweiligen Füllkörper (1 b, 1 c) einsteckbar ist, **dadurch gekennzeichnet, dass** durch die Außenstruktur (4) eine Außenkontur (8, 9) mit zwei einander abgewandten Hauptausdehnungsflächen (8) und mit zumindest drei an die Hauptausdehnungsflächen (8) angrenzenden Seitenflächen (9) gebildet ist, wobei das erste Haltemittel (2) im Bereich einer ersten Seitenfläche (9) und das zweite Haltemittel (2) im Bereich einer zweiten Seitenfläche (9) ausgebildet ist.

2. Füllkörper (1a) nach Anspruch 1, **dadurch gekennzeichnet, dass** die Innenstruktur (5) zumindest ein inneres Leitprofil (14) aufweist, wobei das innere Leitprofil (14) geneigt zu den Hauptausdehnungsflächen (8) ausgebildet ist, insbesondere auf der Seite einer der Hauptausdehnungsflächen (8) durch die Außenstruktur (4) eine Ebene (6) gebildet ist, wobei das innere Leitprofil (14) geneigt zu der Ebene (6) ausgebildet ist, vorzugsweise ein Winkel (α) zwischen dem inneren Leitprofil (14) und der Ebene (6) ≥20° bis ≤70° beträgt.

3. Füllkörper (1a) nach Anspruch 1 oder 2, **dadurch gekennzeichnet, dass** der Füllkörper (1a) ein drittes Haltemittel (2) zum Herstellen einer Verbindung zwischen dem Füllkörper (1a) und einem vierten Füllkörper (1 d) aufweist, wobei das Haltemittel (2) im Bereich einer Hauptausdehnungsfläche (9) ausgebildet und in den vierten Füllkörper (1d) einsteckbar ist.

4. Füllkörper (1a) nach einem der Ansprüche 1 bis 3, **dadurch gekennzeichnet, dass** das jeweilige Haltemittel (2) von der Außenkontur (8, 9) nach außen hervorstehend ausgebildet ist.

5. Füllkörper (1a) nach einem der Ansprüche 1 bis 4, **dadurch gekennzeichnet, dass** der Füllkörper (1a) ein zu dem jeweiligen Haltemittel (2) korrespondierendes Gegenmittel (3) aufweist, vorzugsweise der Füllkörper (1a) die gleiche Anzahl von Haltemitteln (2) und Gegenmitteln (3) aufweist.

6. Füllkörper (1a) nach Anspruch 5, **dadurch gekennzeichnet, dass** ein Teilbereich der Außenstruktur (4) das Gegenmittel (3) bildet.

7. Füllkörper (1a) nach einem der Ansprüche 1 bis 6, **dadurch gekennzeichnet, dass** das Haltemittel (2) in den zu verbindenden Füllkörper (1 b, 1 c, 1 d), vorzugsweise in das Gegenmittel (3) des zu verbindenden Füllkörpers (1 b, 1 c, 1d), rastierend einsteckbar ist.

8. Füllkörper (1a) nach einem der Ansprüche 1 bis 7, **dadurch gekennzeichnet, dass** die Hauptausdehnungsflächen (8) und/oder gegenüberliegende Seitenflächen (9) gleichsinnig gekrümmt und/oder die Hauptausdehnungsflächen (8) und/oder die Seitenflächen als Ebenen ausgebildet sind, vorzugsweise die beiden Hauptausdehnungsflächen (8) und/oder zwei gegenüberliegende Seitenflächen (9) zueinander parallel ausgebildet sind.

9. Füllkörper (1a) nach einem der Ansprüche 1 bis 8, **dadurch gekennzeichnet, dass** der Füllkörper (1 a), insbesondere das jeweilige Haltemittel (2) und/oder das jeweilige Gegenmittel (3), einen von der Außenkontur (8, 9) nach außen hervorstehenden Abstandshalter (15) aufweist.

10. Füllkörper (1a) nach einem der Ansprüche 1 bis 9, **dadurch gekennzeichnet, dass** der Füllkörper (1a) eine Positionierhilfe (12) aufweist, vorzugsweise die Positionierhilfe (12) den Abstandshalter (15) bildet oder den Abstandshalter (15) aufweist.

11. Füllkörper (1 a) nach einem der Ansprüche 1 bis 10, **dadurch gekennzeichnet, dass** das Haltemittel (2) und/oder das Gegenmittel (3) verformbar ist, insbesondere elastisch verformbar ist.

12. Füllkörper (1 a) nach einem der Ansprüche 1 bis 11, **dadurch gekennzeichnet, dass** die Außenkontur (8, 9) prismenartig oder antiprismenartig, insbesondere in der Art eines geraden und/oder regulären Prismas oder Antiprismas mit vorzugsweise sechseckiger Grundfläche ausgebildet ist, wobei die Hauptflächen (8) die Grundfläche und die Deckfläche bilden.

13. Füllkörper (1a) nach einem der Ansprüche 1 bis 12, **dadurch gekennzeichnet, dass** der Füllkörper (1a), insbesondere die Außenkontur (8, 9) flach ausgebildet ist, insbesondere der Füllkörper (1a) die Abmessungen (L+B)*0,5=(2 bis 10)*H bei L=Länge, B=Breite und H=Höhe des Füllkörpers (1 a) aufweist, wobei die Höhe des Füllkörpers (1 a) die Abmessung des Füllkörpers (1 a) von der einen Hauptausdehnungsfläche (8) in Richtung der anderen Hauptausdehnungsfläche (8) ist.

14. Füllkörper (1a) nach einem der Ansprüche 2 bis 13, **dadurch gekennzeichnet, dass** das dritte Haltemittel (2) in zumindest zwei unterschiedlichen Ausrichtungen mit dem vierten Füllkörper (1 d) verbindbar ist und/oder das dritte Haltemittel (2) drehbar in dem vierten Füllkörper (1 d) lagerbar ist.

15. Füllkörper (1a) nach einem der Ansprüche 1 bis 13, **dadurch gekennzeichnet, dass** der Füllkörper (1a) einteilig ausgebildet ist.

16. Füllkörper (1a) nach einem der Ansprüche 1 bis 13, **dadurch gekennzeichnet, dass** die Gesamtheit der Haltemittel (2) und/oder der Füllkörper (1 a) und/oder die Außenkontur (8, 9) und/oder ein Querschnitt des Füllkörpers (1 a) und/oder der Außenkontur (8, 9) radiärsymmetrisch und/oder spiegelsymmetrisch ausgebildet ist, insbesondere der Querschnitt der Außenkontur (8, 9) ein Polygon, insbesondere ein regelmäßiges Polygon bildet.

17. Füllkörper (1a) nach einem der vorigen Ansprüche, **dadurch gekennzeichnet, dass** das erste Haltemittel (2) und das zweite Haltemittel (2) zueinander orthogonal ausgebildet sind.

18. Füllkörper (1a) nach einem der vorigen Ansprüche, **dadurch gekennzeichnet, dass** ein von der Hauptausdehnungsfläche (8) nach außen hervorstehendes Haltemittel (2) unterschiedlich zu einem von der Seitenfläche (9) nach außen hervorstehenden Haltemittel (2) ausgebildet ist.

19. Füllkörper (1a) nach einem der vorigen Ansprüche, **dadurch gekennzeichnet, dass** von den Seitenflächen (9) nach außen hervorstehende Haltemittel (2) identisch ausgebildet sind.

20. Füllkörper (1 a) nach einem der Ansprüche 1 bis 13, wobei der Füllkörper (1 a) aus Kunststoff, Metall oder Keramik bestehen.

21. Anordnung von zumindest drei vorzugsweise identisch ausgebildeten Füllkörpern (1 a, 1 b, 1 c) nach einem der Ansprüche 1 bis 13, **dadurch gekennzeichnet, dass** die Füllkörper (1 a, 1 b, 1 c) im Bereich aneinander angrenzender Seitenflächen (8) mittels der Haltemittel (2) miteinander verbunden sind, wobei die angeordneten Füllkörper (1a, 1 b, 1 c) eine flächige Lage (11) bilden, insbesondere die Ebenen (6) der Füllkörper (1a, 1 b, 1 c) in derselben Ebene (7) angeordnet sind.

22. Anordnung nach Anspruch 21, **dadurch gekennzeichnet, dass** die Füllkörper (1 a, 1 b, 1 c) einer Lage (11) regelmäßig angeordnet sind, vorzugsweise die Füllkörper (1 a, 1 b, 1 c) und/oder die Leitprofile (14) der Füllkörper (1 a, 1 b, 1 c) identisch ausgerichtet sind.

23. Anordnung nach einem der vorigen Ansprüche, **dadurch gekennzeichnet, dass** die Anordnung einen Volumenkörper bildet, insbesondere die Anordnung zumindest zwei aneinander angrenzende flächige Lagen (11) aufweist, insbesondere die Leitprofile (14) von im Bereich der Hauptausdehnungsflächen (8) angrenzenden Füllkörpern (1a, 1 d) unterschiedlich ausgerichtet sind, vorzugsweise entgegengesetzt ausgerichtet sind.
